# EUROPEAN PATENT APPLICATION

(11) **EP 0 962 315 A2**
(43) Date of publication of application: **08.12.1999**
(21) Application number: 99106627.5
(22) Date of filing: 31.03.1999
(51) Int. Cl.: B32B 27/32, B32B 7/06

(54) **Textured release sheet and method of making textured decorative laminates therewith**

(30) Priority: 05.06.1998 US 92480
(71) Applicant: Premark RWP Holdings, Inc., Wilmington, Delaware 19801 (US)
(72) Inventor: Lee, Yein Ming, Temple, Texas 76502 (US); Palmer, Dorothy H., Temple, Texas 76502 (US)
(74) Representative: Howden, Christopher Andrew

(57) **Abstract**

A method of making a polypropylene textured release sheet for use in texturing decorative laminates, includes providing the polypropylene release sheet with texturing during the initial making of the sheet, while the polypropylene is still above its softening temperature. A decorative laminate lay-up includes a plurality of thermosetting resin impregnated layers having a top layer, with the textured polypropylene release sheet oriented adjacent the top layer. A method of forming a textured decorative laminate includes application of heat and pressure to the lay-up sufficient to form a textured decorative laminate.

## Description

The present invention relates to decorative laminates, lay-ups for decorative laminates, and methods of making decorative laminates. In another aspect, the present invention relates to a textured release sheet, method of making such sheet, decorative laminate lay-ups including such sheet, and method of laminating using such sheet.

In the early years of decorative laminates, generally only glossy surface laminates were produced (i.e. using polished molding surfaces), though some attempts were made to provide laminates with slight surface irregularities to give satin or "textured" finishes, In more recent years it has become increasingly desirable to provide various types of irregular surfaces, ranging from relatively shallow textured (e.g., satin, matte or semigloss) surfaces to relatively deeply "sculptured" or embossed surfaces which have a noticeable three-dimensional effect, such as wood grain, leather, slate, abstract patterns, creative designs, etc. Particularly with the rising cost of natural products, it has become more desirable to provide deeply sculptured high pressure laminates which simulate natural materials such as wood, leather and slate.

Today, high pressure decorative laminates meeting NEMA Standards are manufactured with smooth glossy surfaces, with textured surfaces, or with deeply sculptured or embossed surfaces.

As general background, decorative laminates prepared by heat and pressure consolidation have been produced commercially for a number of years, and have found widespread acceptance in the building and furniture industry as counter and table tops, bathroom and kitchen work surfaces, wall paneling, partitions and doors. Such decorative laminates can be described as containing a number of laminae that are consolidated to form a unitary structure carrying a surface decoration which can range from something as simple as a solid color to something as complex as an embossed simulated wood grain finish.

More specifically, a decorative laminate generally comprises plural layers of synthetic resin impregnated paper sheets consolidated or bonded together into a unitary structure under heat and pressure. In normal practice the decorative laminate assembly, from the bottom up, consists of a core of one or more sheets impregnated with phenolic resin, above which lies a decorative sheet impregnated with melamine resin.

The core or base member functions to impart rigidityto the laminate and usually comprises a solid substrate which may or may not be formed prior to the initial laminating step. Prior to stacking, the sheets of the core member are impregnated with a water alcohol solution of phenol formaldehyde, dried and partially cured in a hot air oven, and finally cut into sheets. Examples of such a base or core member include a plurality of sheets of 90 to 150 pound ream kraft paper impregnated throughout and bonded with a substantially completely cured phenolic resin which has been converted to the thermoset state during the initial laminating step, a precured plastic laminate, such as glass fiber-reinforced thermoset polyester resin laminates and the like, a wood product, such as hardboard, woodwaste or particle boards, plywood, and the like, a mineral base board, such as, cement-asbestos board, sheet rock, plaster board, and the like, or a combination of these substrates.

The decorative sheet generally functions to give an attractive appearance to the laminate, and also gives the panel its surface characteristics (i.e. resistance to chemical agents, to heat, to light, to shock and to abrasion). It is generally high quality 50 to 125 ream weight, pigment filled, alpha cellulose paper that has been impregnated with a water-alcohol solution of melamine-formaldehyde resin, dried and partially cured, and finally cut into sheets. The decorative sheet, prior to impregnation with the resin, may be of a solid color or may comprise a decorative design, or a photo-gravure reproduction of natural materials, such as, wood marble, leather, etc.

The decorative laminate is generally obtained by placing the resin impregnated core and decorative sheets between steel plates and subjecting the laminate stack to temperatures in the range of about 800-1600 psi for a time sufficient to consolidate the laminate and cure the resins (generally about 25 minutes to an hour). This causes the resin in the paper sheets to flow, cure and consolidate the sheets into a unitary laminated mass referred in the art as a decorative high-pressure laminate.

Generally, more than one laminate is formed at one time by inserting a plurality of assembled sheets in a stack with each assembly being separated by a release sheet which allows the individual laminates to be separated after consolidation.

Finally, the decorative laminates so formed are then bonded to a reinforcing substrate, such as plywood, hardboard, asbestos board, particle board or the like.

Methods of texturing are well known in the laminating art.

For example, U.S. Patent No. 3,997,696, for Textured Laminate And Method Of Manufacture, issued December 14, 1976 to Jaisle et al., discloses that prior art texturing included use of either-embossed, machined or etched three dimensional press plates in making textured decorative laminates, directly from these plates. While successful, such procedures have proven exceedingly expensive because of the high cost of preparation and maintenance of each plate. The use of a "negative surface laminate master" is also discussed, with a somewhat limited press life of such masters noted.

Various release sheets are also well known in the prior art, some of which are utilized to provide texturing to decorative laminates.

U.S. Patent No. 4,327,121, issued April 27, 1982 to Gray, III, discloses the use of a release sheet for texturing a moldable plastic surface, as for example, pressing a plastic film mounted on a particle board against a sheet having the desired textured pattern while setting the plastic film. One technique for producing the film with a textured surface includes to extrude a molten thermoplastic film, such as polypropylene or polymethylpentene, onto a paper surface, cool it and then pass it between matched steel embossing rolls.

U.S. Patent No. 4,816,314, issued March 28, 1989 to Prawdzik et al., discloses a self-sustaining release sheet having at least one of its surfaces coated with a composition comprised of mineral particles dispersed in a resinous matrix. Suitable materials for use as the release sheet include polyurethane, metallic foil, and polyolefins and polyesters, such as polypropylene, polybutylene, and polyethylene terephthalate.

U.S. Patent No. 4,925,728, issued May 15, 1990 to Crass et al., discloses a coextruded, biaxially stretch oriented multilayer film which is suitable as a release sheet in the production of decorative laminate panels having a matte surface finish. The film includes a base layer of polypropylene, and at least one top layer of 98.5 to 99.6 weight percent propylene homopolymer and 0.4 to 1.5 weight percent polydiorganosiloxane. The peak-to-valley height R_{z} of the surface of the top layer is preferably between 1.0 and 3.0 µ.m.

Thus, there is a need in the art for methods of making textured decorative laminates which do not suffer from the prior art limitations.

There is another need in the art for apparatus useful in making textured decorative laminates which do not suffer from the prior art limitations.

These and other needs in the all will become apparent to those of skill in the art upon review of this specification, including its drawings and claims.

It is an object of the present invention to provide a method of forming a textured decorative laminate.

This and other objects of the present invention will become apparent to those of skill in the art upon review of this specification, including its drawings and claims.

According to the present invention, there is provided a method of forming a textured decorative laminate characterized by the steps of:
(a) forming a stack of two or more thermoplastic resin impregnated layers, with one of the resin impregnated layers being a top layer;
(b) positioning a polypropylene sheet having a textured surface with a pattern such that the textured surface is oriented adjacent the top layer, wherein the textured surface was formed in the polypropylene sheet during formation of the sheet, while the sheet was at a temperature above its softening point;
(c) applying heat and pressure to the stack and polypropylene sheet sufficient to impress the pattern into the top layer and form a decorative laminate with a textured finish.

This and other embodiments of the present invention will become apparent to those of skill in the art upon review of this specification, including its drawings and claims.

The textured release sheet of the present invention is generally a sheet of polypropylene in which the textured portion is provided simultaneous with the forming of the sheet. In the method of forming the textured release sheet, it is critical that the texturing not be applied duiing a postforming step, but rather, that the texturing be provided concurrent with the formation of the sheet, that is, while the polypropylene is generally at a temperature above its softening temperature.

The polypropylene utilized in the practice of the present invention may be generally described as either a propylene homopolymer, or a copolymer of propylene and any other α- olefin.

The melt flow index of the propylene utilized in the present invention will generally be selected to provide the desired physical properties in the texturing process. Generally, the melt flow index will be in the range of about 1 to about 20, preferably in the range of about 5 to about 15, and more preferably in the range of about 7 to about 12, as measured utilizing ASTM D-1238.

Non-limiting commercial examples of polypropylenes suitable for use in the present invention include EOD9706, available from Fina (Dallas, Texas), having a melt flow of 12 g/10 min. (ASTM D-1238 Condition "L"), density of 0.91 g/cc (ASTM D-1505), tensile strength of 5,800 psi (ASTM D-638), elongation of 10 percent at yield, tensile modulus of 280,000 psi (ASTM D-638), flexural modulus of 270,000 psi (ASTM D-790), melting point of 333°F (DSC), and a recrystallization point of 261°F; and also include ESCORENE polypropylene PD 4443, Exxon Chemical, having a melt flow of 7.25 g/10 min. (ASTM 1238), density of 0.90 g/cm³ (ASTM D792), tensile strength of 3,300 psi in the machine direction and 3,500 psi in the transverse direction, elongation at yield of 5% in both the machine and transverse directions, tensile strength at break of 8,000 psi in the machine direction and 7,000 psi in the transverse direction, elongation at break of 600 percent in both the machine and transverse directions, haze of 2.5%, gloss of 85% and a coefficient of friction of 0.3.

As is well known, various processes and catalysts exist for the production of polypropylene. In the practice of the present invention, it is believed that any suitable process and catalyst may be utilized provided that a polypropylene suitable for use in making a textured release sheet for decorative laminates is produced.

For example, the traditional Ziegler-Natta catalyst systems utilize a transition metal compound cocatalyzed by an aluminum alkyl. Having been around since the early 1950's, these Ziegler-Natta type polyolefin catalysts, their general methods of making, and subsequent use, are well known in the polymerization art.

More specifically, a Ziegler-Natta type polymerization catalyst is basically a complex derived from a halide of a transition metal, for example, titanium, chromium or vanadium, with a metal hydride and/or a metal alkyl that is typically an organoaluminum compound. The catalyst component is usually comprised of a titanium halide supported on a magnesium compound complexed with an alkylaluminum, and may even include an electron donor. Examples of such catalyst systems are shown in the following U.S. Patents: 4,107,413; 4,294,721; 4,439,540; 4,115,319; 4,220,554; 4,460,701; and 4,562,173; the disclosures of these patents are hereby incorporated by reference. These are just a few of the hundreds of issued patents relating to catalysts and catalyst systems designed primarily for the polymerization of propylene and ethylene.

As another example for making polypropylene, "metallocene" catalysts for olefin polymerization, comprising a metallocene and an aluminum alkyl component were first proposed in the 1950s. In a metallocene catalyst system, the transition metal compound has two or more cyclopentadienyl ring ligands. Accordingly, titanocenes, zirconocenes and hafnocenes have all been utilized as the transition metal component in such "metallocene" containing catalyst systems for the production of polyolefins.

The textured release sheet of the present invention is generally formed by any suitable processing method which will form the desired textured release sheet useful for providing texture to a decorative laminate. As non limiting examples, common methods which are useful in the present invention, include extrusion and cast embossing.

In the extrusion process, the polypropylene is forced though an extrusion die in a melted state and subsequently cooled into a sheet as the melted extrudate passes between chilled rollers. It is the chilled rollers which provide the desired texturing to the sheet during formation of the sheet rather than utilizing post-cooling embossing rolls to provide texturing to the sheet after it is has cooled. The textured sheet is provided with a smooth back surface.

In cast embossing, flowable polypropylene is deposited or "cast" onto an embossing surface and subsequently cooled to form a polypropylene sheet. The embossing surface onto which the polypropylene is cast is suitable to provide the desired texturing to the thus formed sheet.

Regardless of the method of forming the textured release sheet, it is critical that the texturing be provided generally while the polypropylene is still above the softening temperature, preferably while still above the melting temperature. The textured release sheet will have a textured front surface and a smooth back surface.

The texturing of the present invention may take any form, dimension or pattern imaginable. In general, the peak-to-valley height R_{z} of the texturing surface may be any desirable, but is preferably greater than 100 µ inches, more preferably greater than about 200 µ inches, and even more preferably greater than about 300 µ inches.

The thickness of the textured release sheet of the present invention may be varied within a wide range of limits. If the sheet is too thin, the texture will tend not to transfer. Economic factors tend to set the upper limit for the thickness of the sheet. In general, the thickness of the textured release sheet will be at least 1 mil, and preferably at least 1.5 mils, and more preferably at least 2 mils.

In the production of textured decorative laminates, the textured release is utilized to provide a textured surface to the decorative laminate, and additionally to function as a release sheet between decorative laminate lay-ups. A typical decorative laminate sheet assembly includes several layers of thermosetting resin impregnated core stock (preferably kraft paper) supporting a thermosetting resin impregnated decorative layer, which may be further overlaid with a thermosetting resin impregnated overlay sheet. The thermosetting resin employed is preferably a phenolic resin for the core stock, and preferably a clear melamine formaldehyde resin for the decorative and overlay sheets. The textured surface of the textured release sheet is oriented to be against the top most layer, be it the decorative sheet or overlay sheet, with the smooth back surface of the textured release sheet oriented to be against the core stock of an adjacent lay-up. Upon pressing between suitable laminate press plates, the textured release sheet imparts texture to the top most layer of the first lay-up, and serves to allow release between the first lay-up and the adjacent lay-up.

A platen press assembly as is well known in the lamination art is utilized to provide the necessary heat and/or pressure during lamination.

In the practice of the present invention, there may be utilized, as desired and/or necessary, antioxidants, antiblock agents, slip agents, cross linking agents, stabilizers, ultraviolet ray absorbers, lubricants, foaming agents, antistatic agents, organic and inorganic flame retardants, plasticizers, dyes, pigments, talc, calcium carbonate, carbon black, mica, glass fibers, carbon fibers, aramid resin, asbestos, as well as other fillers as are known in the art.

The polypropylene utilized in the present invention may be further blended with or incorporated into one or more other thermoplastics. Suitable other thermoplastics include polyolefins, especially polyethylenes, other polypropropylenes, polyesters, polyacrylamides, polyamides, polycarbonates, polyurethanes, polyacrylonitriles, and butadiene styrenes. Preferred polyethylenes include linear low density polyethylenes.

### EXAMPLES

The following non-limiting examples are provided merely to illustrate the present invention and are not meant to limit the scope of the claims of the present invention.

### EXAMPLE 1

Thirty-nine films of various morphologies were postembossed cold using a 6"x6" lab press. For texturing, 120 grit sandpaper and 80 grit sandpaper were used. Film samples listed in Table 1 were cut into 6" squares, paired with the sandpaper and pressed for one minutes at 1000 psi. The cold embossed films were then pressed, textured side to face, with resin impregnated decorative and kraft papers to make a high pressure laminate under high press decorative laminate (HPDL) conditions well known to those in the art. All films flattened under HPDL conditions and transferred no pattern.

**Table 1**

| Name | Description | Thickness | Supplier | Type |
|---|---|---|---|---|
| Toray | clear | 2mil | Toray No Kingstown. RI | OPP |
| Toray | matte | 1mil | | |
| Melinex 378 | matte | 92ga | ICI Hopewell, VA | PET |
| Melinex HS2 | hazy | 92ga | ICI | PET |
| Mylar ED11 | matte | 5mil | Dupont | PET |
| Mylar XM020 | clear | 2mil | Dupont | PET |
| Dartek C-917PA | clear | 2mil | Dupont Canada | Nylon |
| Phanex YMC | matte | 2mil | Hoechst Celenese | PET |
| Phanex IHC | clear | 2mil | Hoechst Celenese | PET |
| Tedlar TMR10SM3 | matte | 1mil | Dupont | PVF |
| Tedlar TMR20SM3 | matte | 2mil | Dupont | PVF |
| XM020 | clear | 1mil | Dupont | PEN |
| Embossed Laminated | clear | 2mil | Cypress Pkg | PET/OPP |
| Dartek T420NA | clear | 1mil | Dupont Canada | Oriented Nylon |
| Dartek TC101NA | clear | 1mil | Dupont Canada | Cast Nylon |
| Dartek C101NA | clear | 2mil | Dupont Canada | Cast Nylon |
| Mylar 100XM020LS | hazy | 1mil | Dupont | PET |
| Mylar 100XM020 | hazy | 1mil | Dupont | PET |
| Kapton 100HN | gold/clear | 1mil | Dupont | PI |
| Kapton 200HN | gold/clear | 2mil | Dupont | PI |
| Kapton 100HA | gold/clear | 1mil | Dupont | PI |
| Kapton 200HA | gold/clear | 2mil | Dupont | PI |
| Kapton 200JP | gold/clear | 2mil | Dupont | PI |
| Kapton 100JP | gold/clear | 1mil | Dupont | PI |
| Tedlar TTR20SG4 | clear | 2mil | Dupont | PVF |
| EX 399 | white | 2mil | Exxon | CPP |
| EX 393 | white | 3mil | Exxon | CPP |
| EX 355 | matte | 3mil | Phillips Joanna | PP |
| 3700 TIS | | 3mil | Moire of NC | unk |
| Moire 763 | clear | 2mil | Dupont | PET |
| Mylar 200J101 | clear | 2mil | Dupont | PET |
| Mylar 200A | clear | 2mil | Dupont | PET |
| Mylar 2000 | clear | 2mil | Dupont | PET |
| Mylar 640 GA 848 | clear | 6mil | Dupont | PET |
| Mylar 200 J102 | clear | 2mil | Dupont | PET |
| Mylar 200EL | clear | 2mil | Dupont | PET |
| Mylar 200EB | clear | 2mil | Dupont | PET |
| Melinex 378 | matte | 2mil | ICI | PET |
| Melinex 378 | matte | 92ga | ICI | PET |
| Melinex HS2 | clear | 92ga | ICI | PET |

### EXAMPLE 2

A cycle was established for hot embossing PET and polypropylene (PP) against an aluminum wire mesh. The cycle for PET was 350F for 3.5 minutes. Polypropylene films were embossed at 290F for 3.5 minutes. Films listed in Table 2 embossed in this manner resulted in a film sample with a uniform texture on one side and a smooth surface on the other. All film samples transferred a uniform texture onto a laminate when pressed under HPDL conditions. Two film samples received in house already possessed a uniform texture on one side and a smooth surface on the other. These two were Moire Fingerprint film and Mylar 200WC from Dupont. Both samples transferred a uniform texture onto a laminate when pressed under HPDL conditions.

**TABLE 2**

| | | |
|---|---|---|
| Melinex 377, 92 ga | ICI | PET |
| Mylar ED31, 1 mil | Dupont | PET |
| Tedlar TMR102M3, 1 mil | Dupont | PVF |
| 100XM020LS, 1 mil | Dupont | PEN |
| Kapton 100HN, 1 mil | Dupont | PI |
| Cast PP, 4 mil | PhilJo | PP |
| Cast PVC, 7 mil | Texas T&R | PVC |

### Example 3

Polymer resins were obtained from outside sources and cast extruded using a 25mm co-rotating twin screw extruder under the following extrusion conditions:

| | |
|---|---|
| Barrel Temp. | 170C |
| Die Zone Temp | 170C |
| Melt Temp. | 175C |
| Feeder Rate | 201bf/hr |
| Sheet Caliper | 10 mils |
| Extruder Speed | 100 rpm |

The extruded film was cast embossed using a textured chill roll in the center of a 3-stack roll assembly. The embossed chill roll was engraved with a sand texture of 350 Ra. Polymers listed in Table 3 were extruded in this manner.

**Table 3**

| Source | Name | Resin | %Transfer | Laminate Gloss |
|---|---|---|---|---|
| Chemiplas | N/A | PET | 82 | 3.0 |
| Exxon | Escorene PD 4443 | PP | 75 | 7.0 |
| Eastman Chemical Co. | PET 10388 | PET | 85 | 3.0 |
| ICI Americas | Melinar PET | PET | 85 | 2.8 |
| Rexene Products | PP 13T10A | PP | 75 | 3.2 |
| Rexene Products | PP 13S10A | PP | 70 | 3.0 |
| Fina | EOD 97-06 | PP | 75 | 10.0 |

In all cases, film was made that resulted in a uniform texture on one side and a smooth surface on the other. All samples transferred uniform texture onto a laminate under HPDL conditions.

Profilometer readings of the film and laminate were measured to a evaluate the amount of texture transfer. The results are listed in Table 3.

### EXAMPLE 4

Fina EOD 97-06 and Exxon Escorine PD4443 were extruded under the same conditions as Example 3. The chill roll temperature was varied in order to determine if chill roll temperature effects gloss. The film was used to prepare high pressure laminates by standard means. The results are listed in Table 4.

**Table 4**

| | Chill roll temp | Laminate gloss |
|---|---|---|
| Fina EOD 9706 | 75 C | 12.6 |
| | 95 C | 23.2 |
| | 115 C | 28.9 |
| Exxon PD 4443 | 75 C | 9.8 |
| | 95 C | 13.6 |
| | 115 C | 20.0 |

### EXAMPLE 5

Fina EOD 97-06 was extruded in a 30 to 1 length to diameter ratio single screw, 4.5" wide into a flat die with a chill roll casting section, at varying conditions in order to determine conditions that effect gloss and texture transfer. The first chill roll was textured with a sand texture of 450 Ra paired with a rubber roll. After extrusion, the films were aged for 48 hours at ambient temperature then used to make high pressure laminates under standard HPDL conditions. The surface textures of the films and laminates were measured with a Federal Surfanalyzer 5000 in order to determine percent texture transfer. The conditions and results are listed in Table 5.

**Table 5**

| Sample # | Chill Roll (F) | Line Speed (fpm) | Extruder Speed | Film Gauge | Nip Pressure | % Texture Transfer | Laminate Gloss |
|---|---|---|---|---|---|---|---|
| 1 | 150 | 48 | 76 | 3.8 | 18 | 50 | 6.6 |
| 2 | 150 | 48 | 76 | 3.5 | 55 | 46 | 5.9 |
| 3 | 150 | 48 | 76 | 3.8 | 35 | 70 | 6.4 |
| 4 | 150 | 84 | 135 | 3.5 | 38 | 65 | 7.3 |
| 5 | 150 | 74 | 135 | 3.5 | 38 | 85 | 7.5 |
| 6 | 150 | 50 | 65 | 3.5 | 35 | 61 | 5.7 |
| 7 | 150 | 56 | 56 | 2.5 | 35 | 59 | 4.8 |
| 8 | 150 | 50 | 67 | 3.0 | 35 | 80 | 5.6 |
| 9 | 90 | 50 | 78 | 3.8 | 35 | 70 | 3.1 |
| 10 | 90 | 50 | 78 | 3.8 | 18 | 74 | 3.9 |
| 11 | 90 | 50 | 78 | 3.5 | 55 | 61 | 3.3 |
| 12 | 230 | 50 | 78 | 3.5 | 55 | 82 | 9.4 |
| 13 | 230 | 50 | 78 | 3.8 | 18 | 83 | 9.4 |
| 14 | 230 | 50 | 78 | 3.5 | 35 | 81 | 11.6 |
| 15 | 230 | 60 | 78 | 3.0 | 35 | 80 | 11.2 |
| 16 | 230 | 71 | 78 | 2.5 | 35 | 74 | 10.9 |
| 17 | 230 | 71 | 78 | 2.5 | 55 | 77 | 8.3 |
| 18 | 230 | 89 | 77 | 2.0 | 55 | 43 | 9.5 |

| | | |
|---|---|---|
| Barrel Temperatures: | 1 | 400F |
| | 2 | 400 |
| | 3 | 400 |
| | 4 | 415 |
| | 5 | 450 |
| | 6 | 480 |
| Head Zone | | 430 |
| Adapters | | 410 |
| Melt Temp | | 451 |
| Head Pressure | | 1200 |
| Die Pressure | | 1050 |
| Extruder speed | | 76 RPM |

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which this invention pertains.

The features disclosed in the foregoing description and in the following claims may, both separately and in any combination thereof, be material for realising the invention in diverse forms thereof.

## Claims

1. A method of forming a textured decorative laminate characterized by the steps of:
(a) forming a stack of two or more thermoplastic resin impregnated layers, with one of the resin impregnated layers being a top layer;
(b) positioning a polypropylene sheet having a textured surface with a pattern such that the textured surface is oriented adjacent the top layer, wherein the textured surface was formed in the polypropylene sheet during formation of the sheet, while the sheet was at a temperature above its softening point;
(c) applying heat and pressure to the stack and polypropylene sheet sufficient to impress the pattern into the top layer and form a decorative laminate with a textured finish.

2. The method according to claim 1 wherein the polypropylene has a melt flow in the range of 1 to 20.

3. The method according to claims 1 or 2 wherein the polypropylene sheet has a thickness of at least about 1 mil.

4. The method according to any of the preceding claims, wherein the polypropylene sheet is further characterized by propylene and at least one other thermoplastic selected from the group consisting of polyolefins, polyesters, polyacrylamides, polyamides, polycarbonates, polyurethanes, polyacrylonitriles, and butadiene styrenes.

5. The method according to any of the preceding claims, wherein the textured surface has a peak-to-valley height R₂ greater than 0.01 inches.

6. The method according to any of the preceding claims, wherein the polypropylene sheet is characterized by a propylene homopolymer or a copolymer of propylene and any other α- olefin.

7. The method according to any of the preceding claims, wherein the polypropylene sheet is characterized by polypropylene having a melt flow in the range of 5 to 15.

8. The method of any of the preceding claims, wherein the polypropylene sheet has a thickness of at least 1.5 mils.

9. The method of any of the preceding claims, wherein the textured surface has a peak-to-valley height R_{z} greater than 0.02 inches.
